# EUROPEAN PATENT APPLICATION

(11) **EP 4 538 639 A1**
(43) Date of publication of application: **16.04.2025**
(21) Application number: 23202638.5
(22) Date of filing: 10.10.2023
(51) Int. Cl.: G01C 19/5733, G01C 19/5769, G01C 19/5783, G01P 15/125

(54) **ELECTRODES IN MEMS DEVICES**

(71) Applicant: Murata Manufacturing Co., Ltd., Nagaokakyo-shi, Kyoto 617-8555 (JP)
(72) Inventor: Rinkiö, Marcus, 05200 Rajamäki (FI); Kautto, Mikael, 00270 Helsinki (FI); Iihola, Antti, 00950 Helsinki (FI)
(74) Representative: Boco IP Oy Ab

(57) **Abstract**

The disclosure describes microelectromechanical devices comprising a structure element (301) having at least one proof mass (302, 312) and a capping element (300, 310) having at least a first electrode (304 307, 313)) and a second electrode (305, 306, 314). Several embodiments are described wherein at least the first electrode and the second electrode are respectively located at different heights from the proof mass. The disclosed electrodes arrangements allow improvements in MEMS gyroscopes and accelerations sensors performance and reliability.

## Description

### FIELD OF THE DISCLOSURE

This disclosure relates to electronic devices and more particularly to microelectromechanical devices. The present disclosure further concerns electrode structures in gyroscopes and acceleration sensors.

### BACKGROUND OF THE DISCLOSURE

Microelectromechanical (MEMS) devices are electronic components which combine mechanical and electrical parts. They can be fabricated using microfabrication techniques and can have either simple or complex structures with various moving elements. MEMS devices include different type of sensors such as acceleration sensors (a.k.a. accelerometers) and gyroscopes. MEMS sensors can be applied to swiftly and accurately detect small changes in physical properties. For example, a MEMS gyroscope can swiftly detect very small angular displacements, whereas a MEMS acceleration sensor can accurately measure the rate of change of velocity.

Electrodes in MEMS devices can be placed on a capping element opposite to a proof mass. The proof mass can function as a counter-electrode so that the electrode which is attached to the capping element and the proof mass form a force transducer. The transducer can be used to measure the movement of a proof mass or to drive the movement of a proof mass. The electrodes are fabricated using MEMS microfabrication processes.

### BRIEF DESCRIPTION OF THE DISCLOSURE

The disclosed solution allows to improve the operation of microelectromechanical devices.

The object of the disclosure is achieved by an arrangement which is characterized by what is stated in the independent claims. The preferred embodiments of the disclosure are disclosed in the dependent claims.

The disclosure is based on the idea of improving the quadrature compensation and/or the drive force in MEMS gyroscopes. This is achieved by using electrodes located at different heights from the proof mass. Such electrodes' arrangements may also improve signal to noise ratio and linearity in MEMS acceleration sensors. This electrodes arrangement design provides improvements of microelectromechanical gyroscopes and acceleration sensors reliability.

### BRIEF DESCRIPTION OF THE DRAWINGS

In the following, the disclosure will be described in greater detail by means of preferred embodiments with reference to the accompanying drawings, in which
Figure 1a illustrates an example of a sectional view of a MEMS device with an arrangement comprising electrodes located at a different distance in the z-direction from the proof mass. In this example, the electrodes are electrically connected to the same electrical potential;
Figure 1b illustrates an enlargement of a portion of the MEMS device in figure 1a showing details of the electrodes' arrangement;
Figure 2a illustrates another example of a sectional view of a MEMS device with an arrangement comprising electrodes located at a different distance in the z-direction from the proof mass. In this example, the electrodes are electrically connected to the same electrical potential;
Figure 2b illustrates an enlargement of a portion of the MEMS device in figure 2a showing details of the electrodes' arrangement;
Figure 3a illustrates an example of a sectional view of a MEMS device with an arrangement comprising electrodes located at a different distance in the z-direction from the proof mass. In this example, the electrodes can be connected to different electrical potentials;
Figure 3b illustrates an enlargement of a portion of the MEMS device in figure 3a showing details of the electrodes' arrangement;
Figures 4a-4b illustrate examples of possible electrodes arrangements that can be used in the MEMS device comprising a proof mass that is configured to undergo in-plane translational motion along the x-axis;
Figures 5a-5b illustrate examples of possible electrodes arrangements that can be used in a MEMS device. In these examples, the proof mass is configured to undergo out-of-plane rotational motion;
Figures 6a-6b illustrate other examples of possible electrodes' arrangements that can be used in a MEMS device. In these examples, the proof mass is configured to undergo out-of-plane rotational motion;

### DETAILED DESCRIPTION OF THE DISCLOSURE

The disclosure describes a microelectromechanical device comprising a structure element. The structure element comprises at least one proof mass which lies in its rest position in the xy-plane, and there is a vertical z-direction which is perpendicular to the xy-plane. The proof mass comprises a first edge and a second edge, and the first edge and the second edge are opposite to each other in the x-direction. The proof mass is configured to undergo movement. The microelectromechanical device further comprises a capping element having a top and a bottom. The capping element and the structure elements are attached to each other. The microelectromechanical device further comprises a first electrode located at the bottom of the capping element and a second electrode located at the bottom of the capping element and the first electrode is adjacent to the second electrode. The distance in the z-direction from the proof mass to the second electrode is less than the distance in the z-direction from the proof mass to the first electrode when the proof mass is in its rest position.

The rest position of the proof mass is the position of the proof mass when no force is applied on it. In other words, the rest position of the proof mass is the position where the proof mass is stationary in relation to the fixed parts. The proof mass defines the xy-plane when it is in its rest position. The direction defined by the z-axis is perpendicular to the proof mass in its rest position. The microelectromechanical device is intended to be mounted, for example onto an external object. That external object could be oriented in any manner. Words such as "bottom" and "top", "above", "below", "horizontal" and "vertical" do not refer to the orientation of the device with regard to the direction of earth's gravitational field either when the device is manufactured or when it is in use. The expressions "above" and "below" refer here to positions along the z-axis. The expression "horizontal" refers here to a position that is parallel to the xy-plane, whereas the expression "vertical" refers to a position that is perpendicular to the xy-plane.

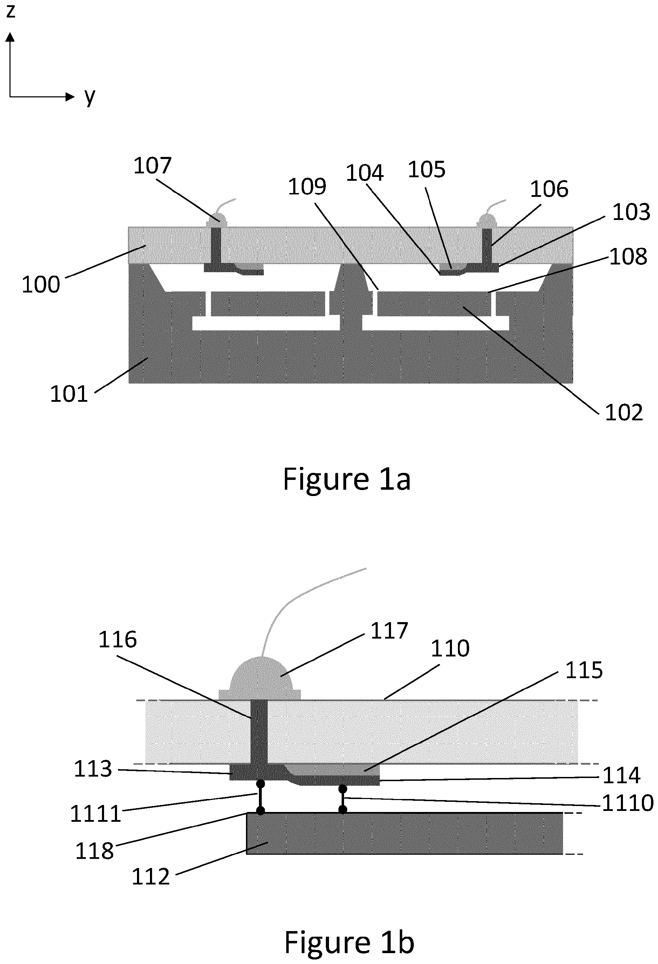

Figures 1a illustrates an example of a sectional view of a MEMS device with an arrangement comprising electrodes located at different distances in the z-direction from the proof mass. The MEMS device comprises a capping element 100 attached to the top of a structure element 101 so that the capping element 100 and the structure element 101 are aligned along the z-direction. The structure element 101 comprises a proof mass 102 which is configured to undergo motion. The proof mass 102 comprises a first edge 108 and a second edge 109, wherein the first edge 108 and the second edge 109 are opposite to each other in the x-direction. The MEMS device further comprises a first electrode 103 attached to the bottom surface of the capping element 100 and a second electrode 104 which is adjacent to the first electrode 103. In this example, the first electrode 103 and the second electrode 104 are connected. The first electrode 103 may lie in a first plane parallel to the xy-plane and the second electrode 104 may lie in a second plane parallel to the xy-plane. The second electrode 104 may be attached to the bottom surface of an insulating layer 105 which is located at the bottom surface of the capping element 100. The first electrode 103 and the second electrode 104 may be connected to the same electrical potential through an electrical via 106 as shown in the figure. The electrical via may be connected to an external electrical connection 107. The structure element 101 may be made of a semiconductor material such as silicon wafer and may be fabricated using semiconductor microfabrication methods. The capping element 100 may be an insulating layer such as a glass layer, or a wafer comprising semiconductor regions and insulating regions. The insulating regions may be glass regions. The capping element 100 may be attached to the structure element 101 using bonding techniques. The electrical via 106 may be made of a semiconducting material. It may be a single-crystal semiconductor such as single crystal silicon or a polycrystalline semiconductor such as polysilicon. Alternatively, the electrical via 106 may be made of a variety of metals that include but are not limited to Al, Cu, Ag, Au, Pt, Pd, Mo or metal alloys. The metals may be formed by a variety of deposition methods such as sputtering, chemical vapor deposition, molecular beam epitaxy, electron beam physical vapor evaporation, or laser metal deposition. These options may apply to all embodiments in this disclosure.

Figure 1b illustrates an enlargement of a portion of the MEMS device in figure 1a showing details of the electrodes' arrangement. The first electrode 113 is attached to the bottom of the capping element 110 and the second electrode 114 is adjacent to the first electrode 113. For example, the first electrode 113 and the second electrode 114 may be adjacent to the first edge 118 of the proof mass 112. The distance in the z-direction from the proof mass, when the proof mass is in its rest position, to the second electrode 1110 is less than the distance in the z-direction from the proof mass to the first electrode 1111. In this example, the first electrode 113 and the second electrode 114 are electrically connected to the same electrical potential. Reference numbers 115, 116 and 117 in figure 1b correspond to reference numbers 105, 106 and 107, respectively, in figure 1a.

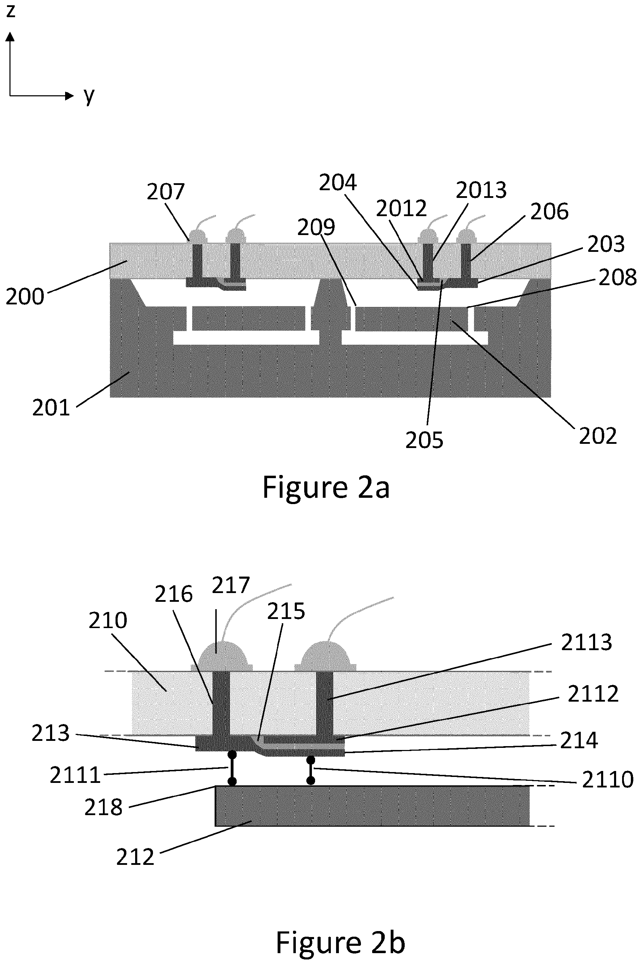

Figure 2a illustrates another example of a sectional view of a MEMS device with an arrangement comprising electrodes located at different distances in the z-direction from the proof mass. In this example, the MEMS device comprises a first electrode 203 located at the bottom surface of the capping element 200, a second electrode 204 which is adjacent to the first electrode 203, and an additional electrode 2012 which is also attached to the bottom surface of the capping element 200 and lies in the same plane as the first electrode 203. For example, the second electrode 204 may be located at the bottom surface of an insulating layer 205, and the insulating layer 205 may be attached to the bottom surface of the additional electrode 2012. The first electrode 203 and the second electrode 204 may be electrically connected and may be set to the same electrical potential through an electrical via 206. The additional electrode 2012 may be electrically isolated from the first electrode 203 and the second electrode 204 by the insulating layer 205 and may therefore be connected to a different electrical potential through a different electrical via 2013. Reference numbers 201, 202, 207, 208 and 209 in figure 2a correspond to reference numbers 101,102, 107, 108 and 109, respectively, in figure 1a.

Figure 2b illustrates an enlargement of a portion of the MEMS device in figure 2a showing details of the electrodes' arrangement. The first electrode 213 is attached to the bottom surface of the capping element 210 and the second electrode 214 is adjacent to the first electrode 213. The distance in the z-direction from the proof mass, when the proof mass is in its rest position, to the second electrode 2110 is less than the distance in the z-direction from the proof mass to the first electrode 2111. The MEMS device may further comprise an additional electrode 2112 which may be attached to the bottom surface of the capping element 210 and may lie in the same plane as the first electrode 213. The first electrode 213 and the second electrode 214 may be electrically connected. The additional electrode 2112 may be electrically isolated from the first electrode 213 and the second electrode 214 and may therefore be connected to a different electrical potential than the potential of the first electrode 213 and the second electrode 214. Reference numbers 212, 217 and 218 in figure 2b correspond to reference numbers 102, 107 and 108, respectively, in figure 1a. Reference numbers 215, 216 and 2113 in figure 2b correspond to reference numbers 205, 206 and 2013, respectively, in figure 2a.

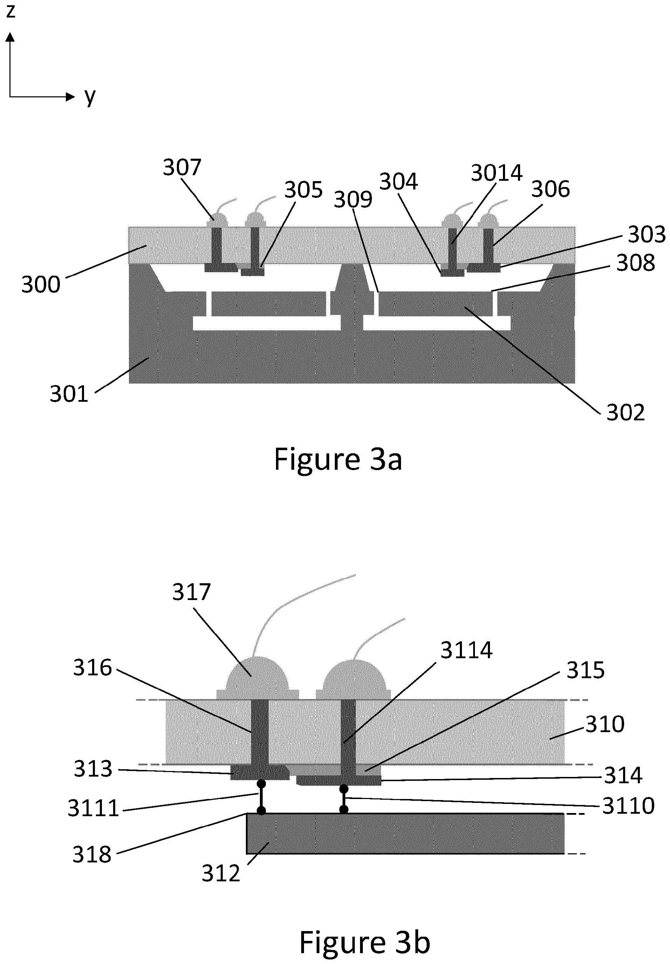

Figure 3a illustrates a further example of a sectional view of a MEMS device with an arrangement comprising electrodes located at different distances in the z-direction from the proof mass. The MEMS device comprises a first electrode 303 located at the bottom surface of the capping element 300 and a second electrode 304 which is adjacent to the first electrode 303. The second electrode 304 may be attached to the bottom surface of an insulating layer 305, and the insulating layer 305 may be attached to the bottom surface of the capping element 300. In this example the first electrode 303 is electrically isolated from the second electrode 304. With such configuration, the first electrode 303 and the second electrode 304 may be connected to different electrical potentials through the independent electrical vias 306 and 3014. Reference numbers 301, 302, 307, 308 and 309 in figure 3a correspond to reference numbers 101,102, 107, 108 and 109, respectively, in figure 1a.

Figure 3b illustrates an enlargement of a portion of the MEMS device in figure 3a showing details of the electrodes' arrangement. The first electrode 313 is attached to the bottom surface of the capping element 310 and the second electrode 314 is adjacent to the first electrode 313. The distance in the z-direction from the proof mass, when the proof mass is in its rest position, to the second electrode 3110 is less than the distance in the z-direction from the proof mass to the first electrode 3111. The first electrode 313 and the second electrode 314 may be electrically isolated and may therefore be connected to different electrical potentials through the independent electrical vias 316 and 3114. Reference numbers 312, 317 and 318 in figure 3b correspond to reference numbers 102, 107 and 108, respectively, in figure 1a. Reference number 315 in figure 3b corresponds to reference number 305 in figure 3a.

The device may be a gyroscope, and the proof mass may be configured to undergo in-plane translational motion along the x-axis. The second electrode may be a first quadrature compensation electrode. The first quadrature compensation electrode may extend beyond the first edge of the proof mass. The first electrode and the first quadrature compensation electrode may be electrically separated. The device may further comprise a second quadrature compensation electrode, and the second quadrature compensation electrode may extend beyond the second edge of the proof mass. The distance in the z-direction from the proof mass to the first quadrature compensation electrode is substantially the same as the distance from the proof mass to the second quadrature compensation electrode when the proof mass is in its rest position.

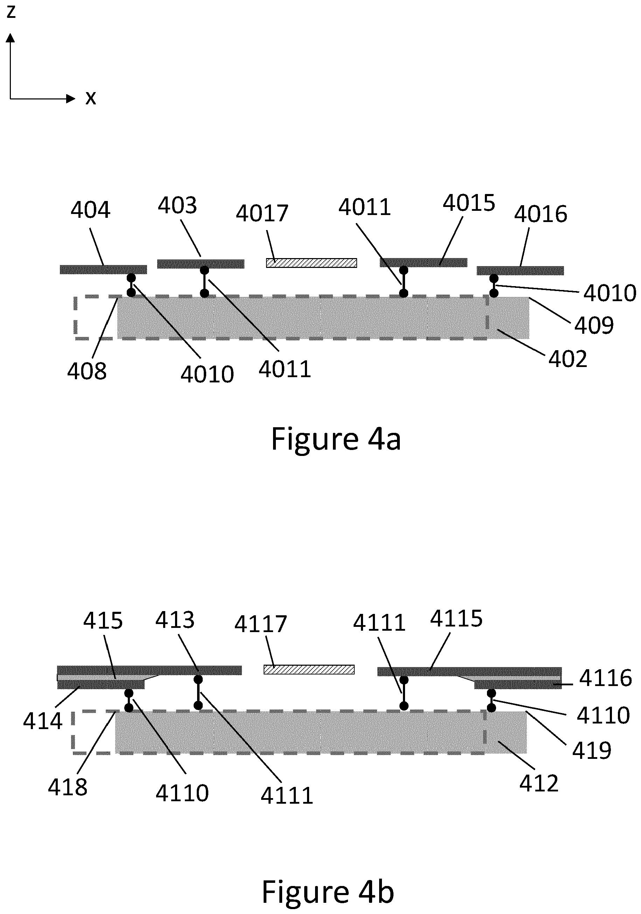

Figure 4a illustrates an example of possible electrodes arrangements that can be used in a MEMS device. The device comprises a proof mass 402 that is configured to undergo in-plane translational motion along the x-axis. The device also comprises a set of electrodes which are located at different distances in the z-direction from the proof mass. The dash lines show the position of the proof mass when it moves from its rest position. The proof mass 402 comprises a first edge 408 and a second edge 409 which are opposite to each other in the x-direction. In this example, the first electrode 403 and the second electrode 404 are adjacent to the first edge 408 of the proof mass, and the second electrode 404 extends beyond the first edge 408 of the proof mass. The distance in the z-direction from the proof mass to the second electrode 4010 is less than the distance in the z-direction from the proof mass to the first electrode 4011. In this example, the first electrode 403 and the second electrode 404 are electrically isolated from each other. The device may further comprise a third electrode 4015 and a fourth electrode 4016. The fourth electrode 4016 extends across the second edge 409 of the proof mass. The third electrode may be symmetrical to the first electrode with respect to a reflection symmetry axis parallel to the z-axis and the fourth electrode may be symmetrical to the second electrode with respect to the same symmetry axis. In other words, the distance in the x-direction from the second edge 409 to the third electrode 4015 may substantially be equal to the distance in the x-direction from the first edge 408 to the first electrode 403, and the distance in the x-direction from the second edge 409 to the fourth electrode 4016 may substantially be equal to the distance in the x-direction from the first edge 408 to the second electrode 404. Additionally, the distance in the z-direction from the proof mass to the first electrode may substantially be equal to the distance from the proof mass to the third electrode 4011, and the distance in the z-direction from the proof mass to the second electrode may substantially be equal to the distance from the proof mass to the fourth electrode 4010 when the proof mass is in its rest position. The microelectromechanical device in this example may be a gyroscope. The second electrode 404 may be a first quadrature compensation electrode and the fourth electrode 4016 may be a second quadrature compensation electrode. The first electrode 403 and the first quadrature compensation electrode may be electrically separated. The third electrode 4015 and the second quadrature compensation electrode may also be electrically separated. The first quadrature compensation electrode 404 and the second quadrature compensation electrode 4016 may be electrically connected to different electrical potentials. The first electrode 403 and the third electrode 4015 may either be sensing and/or driving electrodes. They may have the same or different AC/DC potentials. The device may further comprise one or more central electrodes 4017 located between the first electrode 403 and the third electrode 4015. The central electrodes 4017 may either be sensing or driving electrodes. They may lie in the same plane as the first electrode 403 and the third electrode 4015.

An important source of error in MEMS gyroscopes is the quadrature error which has a significant influence on the sensitivity of the device. The quadrature error is the coupling of the drive mode of the resonating mass to the sense mode (secondary mode) of the gyroscope. In an ideal MEMS gyroscope, the drive mode and the sense mode are perfectly orthogonal. This is hardly the case in a practical MEMS device due to the limitations of the currently available microfabrication technologies. Therefore, the quadrature error is unavoidable. An electromechanical cancellation can be achieved by applying an appropriate counter force voltage to the quadrature compensation electrodes. Both the quadrature compensation and the secondary signal capacitance are inversely proportional to the functional gap. On one hand, with a small functional gap, a high quadrature compensation efficiency can be obtained with a small voltage. On the other hand, a large functional gap allows stability of the secondary signal capacitance as well as stability of the sense electrode. Therefore, separating the quadrature compensation electrode functional gap from the sensing functional gap allows their optimization separately. With such electrodes' configuration, a high quadrature compensation efficiency can be obtained with a small voltage as well as a good stability of the secondary signal capacitance. A high quadrature compensation efficiency may enable less voltage output from ASIC components leading to cost saving. Additionally, in case of high quadrature compensation efficiency, smaller quadrature compensation electrodes may be used providing MEMS element space saving.

Figure 4b illustrates another example of possible electrodes' arrangement that may be used in a MEMS gyroscope. The second electrode 414 may be a first quadrature compensation electrode and the fourth electrode 4116 may be a second quadrature compensation electrode. In this example, the length of the second electrode 414 is less than the length of the first electrode 413, and the length of the fourth electrode 4116 is less than the length of the third electrode 4115. The third electrode may substantially be symmetrical to the first electrode with respect to a reflection symmetry axis parallel to the z-axis and the fourth electrode may substantially be symmetrical to the second electrode with respect to the same symmetry axis. The distance in the z-direction from the proof mass to the second electrode 4110 is less than the distance in the z-direction from the proof mass to the first electrode 4111, and the distance in the z-direction from the proof mass to the fourth electrode 4110 is less than the distance in the z-direction from the proof mass to the third electrode 4111. The distance in the z-direction from the proof mass to the first electrode may substantially be equal to the distance from the proof mass to the third electrode and the distance from the proof mass to the second electrode may substantially be equal to the distance from the proof mass to the fourth electrode. The second electrode 414 extends beyond the first edge 418 of the proof mass 412 and the fourth electrode 4116 extends beyond the second edge 419 of the proof mass 412. The first electrode 413 may be separated from the second electrode 414 by an insulating layer 415, and the third electrode 4115 may be separated from the fourth electrode 4116 by an insulating layer 415. The first electrode 413 and the fourth electrode 4116 may be electrically connected to different potentials, and the second electrode 414 and the third electrode 4115 may be connected to different potentials. The first electrode 413 and the third electrode 4115 may be connected to the same potential. Reference number 4117 in figure 4b corresponds to reference number 4017 in figure 4a.

The proof mass may be configured to undergo rotational motion out of the xy-plane, wherein the rotation axis is along the x-axis, and wherein the distance from the second electrode to the rotation axis is less than the distance from the first electrode to the rotation axis.

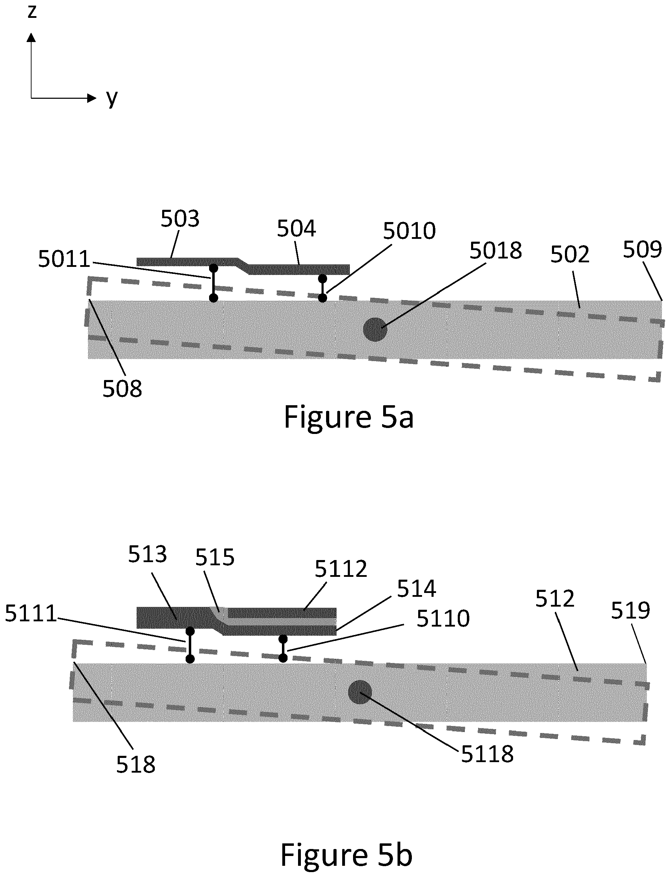

Figure 5a illustrates another example of possible electrodes' arrangements that can be used in a MEMS device. The device comprises a proof mass 502 that is configured to undergo rotational motion out of the xy-plane around the rotation axis 5018. The dash lines show the position of the proof mass when it moves from its rest position. The proof mass 502 comprises a first edge 508 and a second edge 509 which are opposite to each other in the x-direction. The device further comprises a first electrode 503 and a second electrode 504 which are located at different distances in the z-direction from the proof mass when the proof mass 502 is in its rest position. The distance in the x-direction from the second electrode to the rotation axis is less than the distance in the x-direction from the first electrode to the rotation axis, and the distance in the z-direction from the proof mass to the second electrode 5010 is less than the distance in the z-direction from the proof mass to the first electrode 5011. The first electrode 503 and the second electrode 504 may be electrically connected. With such configuration they may be connected to the same electrical potential. For example, the device may be a gyroscope, and the first electrode 503 and the second electrode 504 may be configured to drive the out-of-plane movement of the proof mass.

Figure 5b illustrates another example of possible electrodes' arrangement that can be used in a MEMS device. The MEMS device may be a gyroscope and the electrodes may be drive electrodes. In this example, the device further comprises an additional electrode 5112. The first electrode 513 and the second electrode 514 may be electrically connected and may be set to the same electrical potential, whereas the additional electrode 5112 may be electrically isolated from the first electrode 513 and the second electrode 514 by an insulating layer 515. The additional electrode 5112 may be connected to a different electrical potential. Reference numbers 512, 518, 519, 5110, 5111, and 5118 in figure 5b correspond to reference numbers 502, 508, 509, 5010, 5011, and 5018, respectively, in figure 5a.

The device may further comprise a third electrode and a fourth electrode on the opposite side of the rotation axis wherein the distance from the fourth electrode to the rotation axis is substantially equal to the distance from the second electrode to the rotation axis, and the distance from the third electrode to the rotation axis is substantially equal to the distance from the first electrode to the rotation axis.

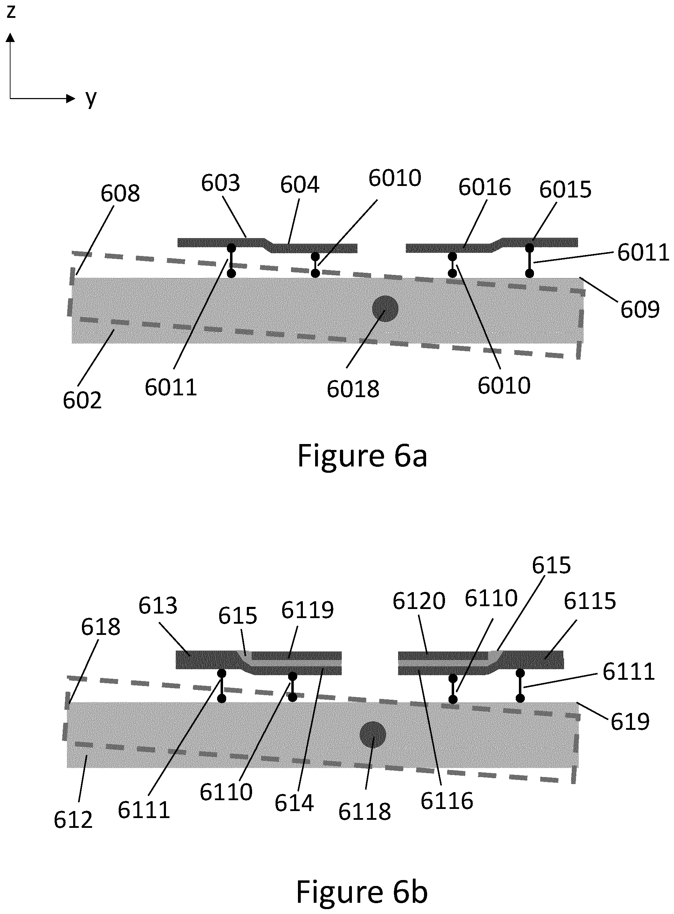

Figure 6a illustrates another example of possible electrodes' arrangements that can be used in a MEMS device. The device comprises a proof mass 602 that is configured to undergo rotational motion out of the xy-plane and around the rotation axis 6018. The dash lines show the position of the proof mass when it moves from its rest position. The proof mass 602 comprises a first edge 608 and a second edge 609 which are opposite to each other in the x-direction. The device further comprises a first electrode 603 and a second electrode 604 which are adjacent to each other and are located different distances in the z-direction from the proof mass. The distance in the x-direction from the second electrode to the rotation axis is less than the distance in the x-direction from the first electrode to the rotation axis, and the distance in the z-direction from the proof mass to the second electrode 6010 is less than the distance in the z-direction from the proof mass to the first electrode 6011. In this example, the device further comprises a third electrode 6015 and fourth electrode 6016. The third electrode 6015 is symmetrical to the first electrode 603 with respect to the rotation axis and the fourth electrode 6016 is symmetrical to the second electrode 604 with respect to the rotation axis so that the distance in the x-direction from the third electrode to the rotation axis is substantially the same as the distance in the x-direction from the first electrode to the rotation axis, and the distance in the x-direction from the fourth electrode to the rotation axis is substantially the same as the distance in the x-direction from the second electrode to the rotation axis. The distance in the z-direction from the proof mass to the first electrode 6011 may substantially be the same as the distance from the proof mass to the third electrode, and the distance in the z-direction from the proof mass to the second electrode 6010 may substantially be the same as the distance from the proof mass to the fourth electrode. For example, the device may be an acceleration sensor, and the first electrode 603, the second electrode 604, the third electrode 6015 and the fourth electrode 6016 may be configured to measure the out-of-plane movement of the proof mass. In other words, the electrodes may be sensing electrodes, and the first electrode 603 may be electrically connected to the second electrode 604, and the third electrode 6015 may be electrically connected to the fourth electrode 6016. The first electrode, the second electrode, the third electrode and the fourth electrode may be connected to the same electrical potential.

A low out-of-plane signal to noise ratio is a common issue in MEMS accelerometers. It is therefore beneficial to increase the signal to noise ratio and linearity in order to improve the accuracy of these devices. With such electrodes' arrangement, the out-of-plane signal to noise ratio and linearity may be increased.

Figure 6b illustrates another example of possible electrodes' arrangement that can be used in a MEMS device. The MEMS device may be an acceleration sensor and the electrodes may be sensing electrodes configured to measure the out-of-plane movement of the proof mass. In this example, the proof mass 612 is configured to undergo rotation motion out of the xy-plane and around the rotation axis 6118. The device further comprises a first additional electrode 6119 adjacent to the first electrode 613 and the second electrode 614, and a second additional electrode 6120 adjacent to the third electrode 6115 and fourth electrode 6116. The first electrode 613 and the second electrode 614 may be electrically connected and may be set to the same electrical potential. The first additional electrode 6119 may be electrically isolated from the first electrode 613 and the second electrode 614 by an insulating layer 615. The first additional electrode 6119 may be connected to a different electrical potential. The third electrode 6115 and the fourth electrode 6116 may be electrically connected and may be set to the same electrical potential. The second additional electrode 6120 may be electrically isolated from the third electrode 6115 and the fourth electrode 6116 by an insulating layer 615. The second additional electrode 6120 may be connected to a different electrical potential. The first electrode, the second electrode, the third electrode, and the fourth electrode may be connected to the same electrical potential. Reference numbers 618, 619, 6110 and 6111 in figure 6b correspond to reference numbers 608, 609, 6010 and 6011, respectively, in figure 6a.

## Claims

1. A microelectromechanical device comprising:
- a structure element, wherein the structure element comprises at least one proof mass which lies in its rest position in the xy-plane, and there is a vertical z-direction which is perpendicular to the xy-plane, and wherein the proof mass comprises a first edge and a second edge, wherein the first edge and the second edge are opposite to each other in the x-direction, and wherein the proof mass is configured to undergo movement,
- a capping element having a top and a bottom,
wherein the capping element and the structure elements are attached to each other, and wherein the microelectromechanical device further comprises a first electrode located at the bottom of the capping element and a second electrode located at the bottom of the capping element, and the first electrode is adjacent to the second electrode,
**Characterized in that**
the distance in the z-direction from the proof mass to the second electrode is less than the distance in the z-direction from the proof mass to the first electrode when the proof mass is in its rest position.

2. A microelectromechanical device according to claim 1, wherein the device is a gyroscope, and wherein the proof mass is configured to undergo in-plane translational motion along the x-axis, and wherein the second electrode is a first quadrature compensation electrode, and the first quadrature compensation electrode extends beyond the first edge of the proof mass, and wherein the first electrode and the first quadrature compensation electrode are electrically separated, and wherein the device further comprises a second quadrature compensation electrode, and the second quadrature compensation electrode extends beyond the second edge of the proof mass, and wherein the distance in the z-direction from the proof mass to the first quadrature compensation electrode is substantially the same as the distance from the proof mass to the second quadrature compensation electrode when the proof mass is in its rest position.

3. A microelectromechanical device according to claim 1, wherein the proof mass is configured to undergo rotational motion out of the xy-plane, and wherein rotation axis is along the x-axis, and wherein the distance from the second electrode to the rotation axis is less than the distance from the first electrode to the rotation axis.

4. A microelectromechanical device according to claim 3, wherein the first electrode and the second electrode are electrically connected.

5. A microelectromechanical device according to claim 4, wherein the device is a gyroscope, and wherein the first electrode and the second electrode are configured to drive the out-of-plane movement of the proof mass.

6. A microelectromechanical device according to claim 3-4, wherein the device further comprises a third electrode and a fourth electrode on the opposite side of the rotation axis, and wherein the distance from the fourth electrode to the rotation axis is substantially equal to the distance from the second electrode to the rotation axis and the distance from the third electrode to the rotation axis is substantially equal to the distance from the first electrode to the rotation axis.

7. A microelectromechanical device according to claim 6, wherein the third electrode is electrically connected to the fourth electrode, and wherein the first electrode, the second electrode, the third electrode, and the fourth electrode are connected to the same electrical potential.

8. A microelectromechanical device according to claim 7, wherein the device is an acceleration sensor, and wherein the first electrode, the second electrode, the third electrode and the fourth electrode are configured to measure the out-of-plane movement of the proof mass.
